# EUROPÄISCHE PATENTANMELDUNG

(11) **EP 2 939 984 A1**
(43) Veröffentlichungstag der Anmeldung: **04.11.2015**
(21) Anmeldenummer: 15161231.4
(22) Anmeldetag: 27.03.2015
(51) Int. Cl.: C02F 3/12

(54) **TRENNWAND ZUR BEGRENZUNG EINER KLÄRKAMMER EINER KLEINKLÄRANLAGE**

(30) Priorität: 02.05.2014 DE 202014102055 U
(71) Anmelder: ATB Umwelttechnologien GmbH, 32457 Porta Westfalica (DE)
(72) Erfinder: Baumann, Markus, 32547 Bad Oeynhausen (DE)
(74) Vertreter: Ter Meer Steinmeister & Partner

(57) **Zusammenfassung**

Trennwand (42) zur Begrenzung einer Klärkammer (12, 32) einer Kleinkläranlage, umfassend zumindest ein Wandelement (44, 46, 48) und einen oder mehrere Hohlkörper (56, 58, 60) zur Fluidleitung oder -speicherung, die an dem Wandelement (44, 46, 48) angebracht sind, dadurch gekennzeichnet, dass der oder die Hohlkörper (56, 58, 60) in das Wandelement (44, 46, 48) integriert oder an dieses angeformt sind und einstückig mit dem Wandelement (44, 46, 48) durch ein Blasformverfahren oder ein Rotationsschmelzverfahren aus Kunststoff hergestellt sind.

## Beschreibung

Die vorliegende Erfindung betrifft eine Trennwand zur Begrenzung einer Klärkammer einer Kleinkläranlage gemäß dem Oberbegriff des Anspruchs 1.

Kleinkläranlagen werden beispielsweise zur Abwasserreinigung für Haushalte eingesetzt, die nicht an das öffentliche Kanalnetz angeschlossen sind. Sie können mehrere Kammern umfassen, insbesondere eine Vorklärkammer zur Vorklärung des Abwassers sowie eine biologische Klärkammer, in der die eigentliche biologische Endreinigung des Abwassers mittels Belebtschlamm stattfindet. Vorklärkammer und biologische Klärkammer können in einem gemeinsamen Behälter angeordnet sein und werden durch eine Trennwand getrennt, über welche die biologische Klärkammer aus der Vorklärkammer beschickt wird. Der Einfachheit halber sollen in der vorliegenden Beschreibung die verschiedenen Kammern der Kleinkläranlage als Klärkammern bezeichnet werden, da es auf ihre genaue Funktion für die Vorklärung oder biologische Endreinigung im Sinne der vorliegenden Erfindung nicht ankommt.

Als Beispiel für eine biologische Kleinkläranlage neuerer Bauart sei an dieser Stelle auf die Schrift EP 2 641 876 A1 verwiesen. Diese und ähnliche Anlagen benötigen Funktionselemente zur Förderung von Abwasser von einer Klärkammer in eine andere oder zur Zwischenspeicherung eines Abwasservolumens. Diese Funktionselemente umfassen Rohre, Behälter oder andere Hohlkörper zur Fluidleitung oder -speicherung, die gewöhnlich an einem Wandelement der Trennwand angebracht sind, die eine Klärkammer begrenzt bzw. mehrere Klärkammern voneinander trennt. Typische Komponenten dieser Art sind Mammutheber oder deren Teile, die an der Trennwand aufgehängt sind, Pufferbehälter, Probenbehälter oder durch die Trennwand geführte Rohrabschnitte.

Beim Aufbau einer solchen Kleinkläranlage muss eine größere Anzahl von Komponenten installiert werden. Dies macht die Montage naturgemäß zeitaufwändig und kostspielig. In dem Bestreben, Zeit und Kosten einsparen zu können, soll der Aufbau der bisherigen Kleinkläranlagen noch weiter vereinfacht werden. Insbesondere soll die Zahl der zu installierenden Komponenten verringert werden.

Es ist daher eine Aufgabe der vorliegenden Erfindung, eine Kleinkläranlage der vorstehend beschriebenen Art durch Reduktion der Zahl ihrer einzeln zu installierenden Komponenten zu vereinfachen und auf diese Weise Zeit und Kosten bei der Montage zu sparen.

Diese Aufgabe wird erfindungsgemäß durch eine Trennwand zur Begrenzung einer Klärkammer einer Kleinkläranlage mit den Merkmalen des Anspruchs 1 gelöst.

Bei der erfindungsgemäßen Trennwand sind der oder die Hohlkörper zur Fluidleitung oder -speicherung nicht mehr nachträglich an dem Wandelement angebracht, sondern einstückig mit diesem ausgeformt, derart, dass der oder die Hohlkörper vollständig in das Wandelement integriert sind oder an dieses angeformt sind. Wandelement und Hohlkörper sind in diesem Fall aus einem thermoplastischen Kunststoff mittels eines Blasformverfahrens oder eines Rotationsschmelzverfahrens hergestellt. Durch diese Integration werden Arbeitsgänge bei der Herstellung der Teile der Kleinkläranlage eingespart, und auch die Installation wird vereinfacht.

Gemäß einer bevorzugten Ausführungsform der vorliegenden Erfindung ist zumindest einer der Hohlkörper derart in das Wandelement integriert, dass die Wandebene den Hohlkörper schneidet. Beispielsweise kann es sich bei diesem Hohlkörper um ein Rohr handeln, dessen Rohrachse in der Wandebene liegt. Hierdurch wird innerhalb der Kleinkläranlage Platz gespart, der bisher erforderlich war, um einen rohrförmigen Hohlkörper außen am Wandelement anzubringen.

Weiter vorzugsweise ist zumindest einer der Hohlkörper ein Rohr oder ein Behälter. Hierbei kann es sich beispielsweise um einen Mammutheber bzw. einen Teil desselben handeln, oder um einen Puffer- oder Probenbehälter, der im oberen Bereich des Wandelements in dieses integriert oder an dieses angeformt ist.

Gemäß einer weiteren bevorzugten Ausführungsform der Erfindung umfasst die Trennwand zumindest zwei nebeneinander angeordnete erste und zweite Wandelemente, deren Höhe der Trennwand entspricht und die entlang einer etwa senkrechten Stoßkante aufeinander stoßen. Die Trennwand wird also in diesem Fall durch mehrere zusammengesetzte Wandelemente gebildet.

In einer Fortbildung dieser Ausführungsform umfasst die erfindungsgemäße Trennwand weiter vorzugsweise ein drittes Wandelement, das keilförmig ausgebildet ist und in eine keilförmige Aussparung zwischen dem ersten und zweiten Wandelement eingesetzt ist. Beispielsweise kann dieses dritte Wandelement von oben in die keilförmige Aussparung eingeschoben werden, um die Trennwand zu vervollständigen.

Weiter vorzugsweise sind die Stoßkanten zwischen den Wandelementen als Nut-Feder-Verbindungen profiliert. Die Stoßkanten sind also in diesem Fall ineinander gefügt, was einen sicheren Zusammenhalt der einzelnen Teile der Trennwand gewährleistet.

Gemäß einer weiteren bevorzugten Ausführungsform der vorliegenden Erfindung umfassen das erste und das zweite Wandelement identische oder zueinander symmetrische Teile. Dies stellt noch eine weitere Vereinfachung der Fertigung der Wandelemente dar. Das erste und Wandelement können beispielsweise in einer identischen Form hergestellt werden. Hierbei ist auch ein Fall denkbar, in welchem vor der Installation an einem der beiden Wandelemente überflüssige Teile entfernt werden oder auch Öffnungen verschlossen werden, so dass das jeweilige Wandelement gebrauchsfertig angepasst werden kann.

Die vorliegende Erfindung umfasst ferner eine Kleinkläranlage, umfassend einen Klärbehälter, dessen Innenraum durch zumindest eine Trennwand der erfindungsgemäßen Art in verschiedene Klärkammern unterteilt ist.

Der Klärbehälter dieser erfindungsgemäßen Kleinkläranlage kann gemäß einer bevorzugten Ausführungsform aus Kunststoff ausgeformt sein und auf seiner Oberseite ein Mannloch aufweisen, und sein Innenraum ist in diesem Fall durch die Trennwand in zwei Klärkammern unterteilt, wobei die Breite jedes Wandelements der Trennwand kleiner ist als der Innendurchmesser des Mannlochs. Diese Ausführungsform ermöglicht gegebenenfalls auch eine Nachrüstung einer bekannten Kleinkläranlage, bzw. die Verwendung eines herkömmlichen Klärbehälters, der durch eine Trennwand der erfindungsgemäßen Art unterteilt wird.

Im folgenden werden bevorzugte Ausführungsformen der Erfindung anhand der beigefügten Zeichnung näher erläutert.
- Fig. 1 und 2: sind perspektivische Teildarstellungen eines Behälters einer Kleinkläranlage, in welchem eine Trennwand gemäß einer Ausführungsform der vorliegenden Erfindung eingesetzt ist;
- Fig. 3: ist eine Vorderansicht der Trennwand aus Fig. 1; und
- Fig. 4: ist eine zerlegte Vorderansicht der Trennwand aus den Fig. 1 und 2.

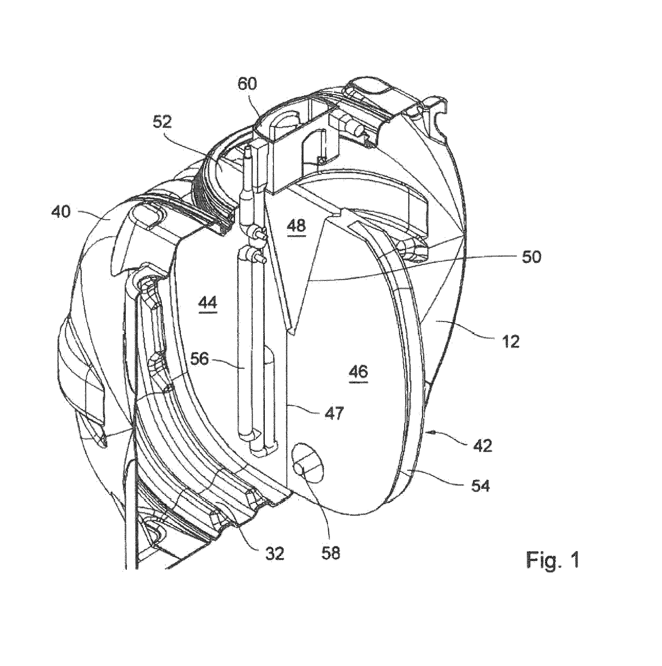

Der in Fig. 1 teilweise dargestellte Behälter 40 stellt einen Klärbehälter einer biologischen Kleinkläranlage dar. Der Behälter 40 ist aus thermoplastischem Kunststoff z.B. durch Blasformen gefertigt und in der Darstellung in Fig. 1 aufgeschnitten, wobei die Schnittebene senkrecht steht und in Längsrichtung durch den Behälter 40 verläuft. Der Innenraum des Behälters 40 ist in zwei Klärkammern unterteilt, nämlich in eine hintere Klärkammer 12, die eine Vorklärkammer bildet, und eine vordere Klärkammer 32, welche die eigentliche biologische Klärkammer darstellt.

Die gesamte Kleinkläranlage ist im wesentlichen aufgebaut wie diejenige, die in EP 2 641 876 A1 beschrieben wird. Auf die genauen Einzelheiten des Ablaufs des Klärprozesses soll hier nicht eingegangen werden, da diese nicht Gegenstand der vorliegenden Erfindung sind.

Die beiden Klärkammern werden innerhalb des Behälters 40 durch eine Trennwand 42 voneinander getrennt, die quer im Behälter 40 sitzt. Die Trennwand 42 begrenzt somit die hintere Klärkammer 12 und grenzt diese von der vorderen Klärkammer 32 ab.

Die Trennwand 42 ist in drei Wandelemente unterteilt, nämlich zwei nebeneinander angeordnete erste und zweite Wandelemente 44, 46, die entlang einer senkrechten Stoßkante 47 aufeinanderstoßen, und ein drittes keilförmiges Wandelement 48, das von oben in eine keilförmige Aussparung 50 zwischen dem ersten Wandelement 44 und dem zweiten Wandelement 46 eingesetzt ist. Diese Aufteilung der Trennwand 42 in drei Wandelemente 44, 46, 48 ermöglicht das erleichterte Einführen der Wandelemente durch ein Mannloch 52 auf der Oberseite des Klärbehälters 40. Jedes der Wandelemente 44, 46, 48 weist eine geringere Breite auf als der Innendurchmesser des Mannlochs 52. Die Stoßkanten 47 zwischen dem ersten Wandelement 44 und dem zweiten Wandelement 46 sowie zwischen dem ersten Wandelement 44 und dem dritten Wandelement 48 und dem zweiten Wandelement 46 und dem dritten Wandelement 48 können als Nut-Feder-Verbindungen profiliert sein, damit die einzelnen Teile sicheren Halt aneinander haben. Ein Nut-Profil 54 ist auch umlaufend seitlich und unten an den ersten und zweiten Wandelementen 44, 46 vorhanden. In dieses Nut-Profil 54 kann eine nicht näher dargestellte Rippe an der Innenwand des Klärbehälters 40 eingreifen.

Jedes der Wandelemente 44, 46, 48, die die Trennwand 42 bilden, ist einstückig mit Hohlkörpern ausgeformt, die zur Fluidleitung oder -speicherung dienen und funktionelle Bestandteile der Kleinkläranlage bilden. Im vorliegenden Ausführungsbeispiel ist das erste Wandelement 44 einstückig mit einem Mammutheber 56 ausgeformt, und zwar durch ein Blasformverfahren oder ein Rotationsschmelzverfahren, so dass der Mammutheber 56 an das erste Wandelement 44 angeformt ist und ein Teil mit diesem bildet. In dem zweiten Wandelement 46 ist im unteren Bereich ein Rohrabschnitt 58 als Durchlass zwischen den beiden Klärkammern 12,32 angeordnet, der einstückig mit dem zweiten Wandelement 46 ausgeformt und in dieses integriert ist. An das dritte keilförmige Wandelement 48 ist auf der Oberseite ein Pufferbehälter 60 einstückig angeformt.

Durch diese Art der Ausformung sind das jeweilige Wandelement 44, 46, 48 und der damit ausgeformte Hohlkörper vollständig in ein einziges Bauteil integriert. Dies erleichtert die Montage erheblich und spart Zeit und Kosten.

Abweichend von den hier dargestellten Ausführungsformen können auch zwei Wandelemente zur Bildung der Trennwand 42 symmetrisch oder identisch ausgebildet sein, so dass sie in einer einzigen Form hergestellt werden können. Nach dem Ausformen kann jedes der hierdurch hergestellten Wandelemente individuell an seine Funktion angepasst werden, etwa durch Abschneiden überflüssiger Teile, Verstopfen von Rohröffnungen, usw. Möglich ist ferner, den oder die Hohlkörper in der Wandebene auszubilden, um Platz auf den Seitenfläcken der Wandelemente 44, 46, 48 zu sparen.

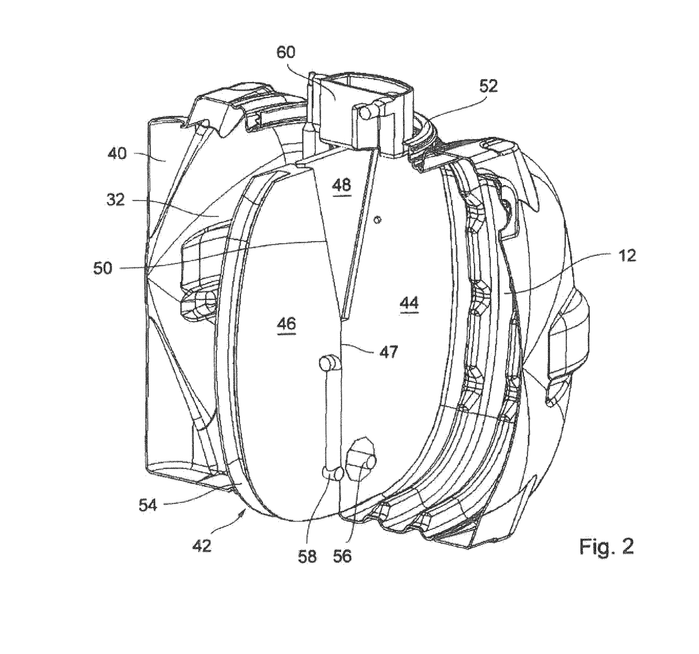

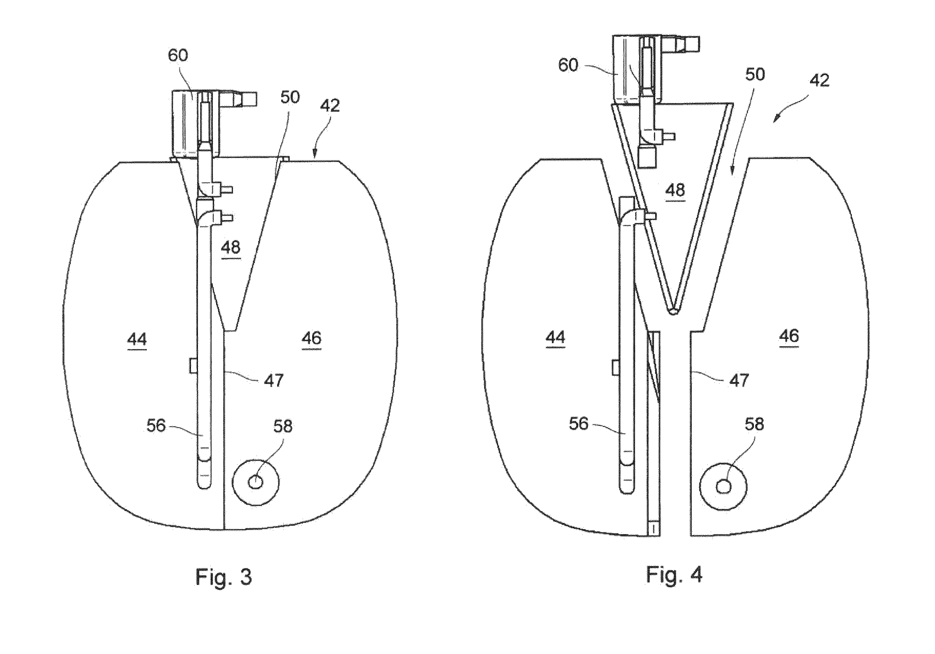

Fig. 2 zeigt den Klärbehälter 40 mit der Trennwand 42 aus Fig. 1 perspektivisch aus einem anderen Blickwinkel. In der Vorderansicht in Fig. 3 ist die Trennwand 42 freigestellt und in Fig. 4 nochmals im zerlegten Zustand dargestellt.

## Patentansprüche

1. Trennwand (42) zur Begrenzung einer Klärkammer (12, 32) einer Kleinkläranlage, umfassend zumindest ein Wandelement (44, 46, 48) und einen oder mehrere Hohlkörper (56, 58, 60) zur Fluidleitung oder -speicherung, die an dem Wandelement (44, 46, 48) angebracht sind, **dadurch gekennzeichnet, dass** der oder die Hohlkörper (56, 58, 60) in das Wandelement (44, 46, 48) integriert oder an dieses angeformt sind und einstückig mit dem Wandelement (44, 46, 48) durch ein Blasformverfahren oder ein Rotationsschmelzverfahren aus Kunststoff hergestellt sind.

2. Trennwand gemäß Anspruch 1, **dadurch gekennzeichnet, dass** zumindest einer der Hohlkörper (56, 58, 60) derart in das Wandelement (44, 46, 48) integriert ist, dass die Wandebene den Hohlkörper (56, 58, 60) schneidet.

3. Trennwand gemäß Anspruch 1 oder 2, **dadurch gekennzeichnet, dass** zumindest einer der Hohlkörper (56, 58, 60) ein Rohr oder ein Behälter ist.

4. Trennwand gemäß einem der vorhergehenden Ansprüche, **dadurch gekennzeichnet, dass** die Trennwand (42) zumindest zwei nebeneinander angeordnete erste und zweite Wandelemente (44, 46) umfasst, deren Höhe der Trennwand (42) entspricht und die entlang einer etwa senkrechten Stoßkante (47) aufeinander stoßen.

5. Trennwand gemäß Anspruch 4, **gekennzeichnet durch** ein drittes Wandelement (48), das keilförmig ausgebildet ist und in eine keilförmige Aussparung (50) zwischen dem ersten und zweiten Wandelement (44, 46) eingesetzt ist.

6. Trennwand gemäß Anspruch 4 oder 5, **dadurch gekennzeichnet, dass** die Stoßkanten (47) zwischen den Wandelementen (44, 46, 48) als Nut-Feder-Verbindungen profiliert sind.

7. Trennwand gemäß einem der Ansprüche 4 bis 6, **dadurch gekennzeichnet, dass** das erste und das zweite Wandelement (44, 46) identische oder zueinander symmetrische Teile umfassen.

8. Kleinkläranlage, umfassend einen Klärbehälter (40), dessen Innenraum durch zumindest eine Trennwand (42) gemäß einem der vorhergehenden Ansprüche in verschiedene Klärkammern (12, 32) unterteilt ist.

9. Kleinkläranlage gemäß Anspruch 9 in Verbindung mit einem der Ansprüche 4 bis 8, **dadurch gekennzeichnet, dass** der Klärbehälter (40) aus Kunststoff ausgeformt ist und auf seiner Oberseite ein Mannloch (52) aufweist, und dass sein Innenraum durch die Trennwand (42) in zwei Klärkammern (12, 32) unterteilt ist, wobei die Breite jedes Wandelements (44, 46, 48) der Trennwand (42) kleiner ist als der Innendurchmesser des Mannlochs (52).
